# FASCICULE DE BREVET EUROPEEN

(11) **EP 3 001 534 B1**
(45) Date de publication et mention de la délivrance du brevet: **16.08.2017**
(21) Numéro de dépôt: 15186254.7
(22) Date de dépôt: 22.09.2015
(51) Int. Cl.: H02J 7/00, B60L 11/18

(54) **DISPOSITIF DE RECHARGE, STATION DE RECHARGE, MODULE DE SÉCURITE ET MODE DE COMMANDE ASSOCIÉS**
WIEDERAUFLADEVORRICHTUNG, WIEDERAUFLADESTATION UND ENTSPRECHENDES SICHERHEITSMODUL SOWIE ENTSPRECHENDER STEUERMODUS
CHARGING DEVICE, CHARGING STATION, ASSOCIATED SECURITY MODULE AND CONTROL MODE

(30) Priorité: 23.09.2014 FR 1458975
(43) Date de publication de la demande: 30.03.2016
(73) Titulaire: DRIVECO, 20251 Pancheraccia (FR)
(72) Inventeur: BELKHODJA, Sofiane, 95570 Bouffemont (FR); COUDYSER, Cyrille, 75014 Paris (FR)
(74) Mandataire: Cabinet Plasseraud

(56) Documents cités:
- EP-A1- 2 768 113
- FR-A1- 2 977 402
- US-A1- 2013 300 429

## Description

La présente invention concerne un dispositif de recharge d'un équipement en énergie électrique.

Ce type de dispositif est typiquement utilisé pour recharger un équipement fonctionnant à l'énergie électrique, tel un véhicule. Ces dispositifs présentent une prise d'alimentation destinée à être connecter à l'équipement et qui est alors sélectivement raccordée ou non à une source d'alimentation en énergie électrique. Le dispositif est alors pourvu d'un module de commande comprenant d'une part une unité de traitement raccordée à la prise d'alimentation par un fil de référence délivrant une tension ayant une valeur de référence tant que la prise n'est pas branchée à l'équipement, et d'autre part un module de connexion configuré pour raccorder ou isoler la prise d'alimentation de la source d'énergie électrique sous la commande de l'unité de traitement.

L'unité de traitement commande alors au module de connexion d'isoler la prise d'alimentation de la source d'énergie électrique tant que la prise n'est pas branchée à l'équipement.

Des dispositifs de ce type sont par exemple décrits dans les documents US 2013/300429 A1 et FR 2 977 402 A1.

Ce type de dispositif présente certains inconvénients.

En effet, dans certaines circonstances, notamment en cas de dysfonctionnement de l'unité de traitement, la prise d'alimentation risque de demeurer connectée à la source d'alimentation alors même que la prise est débranchée de l'équipement. Ce cas de figure pose un problème de sécurité majeur pour des puissances électriques importantes, par exemple de l'ordre de plusieurs kilowatts. En effet, des arcs électriques sont alors susceptibles de se former, entraînant des risques de brulure et de projection de matière en fusion pouvant conduire à la mort des utilisateurs.

L'invention vient améliorer la situation.

A cet effet, l'invention concerne un dispositif de recharge d'un équipement en énergie selon la revendication 1.

L'invention est définie par les caractéristiques de la revendication indépendante 1. Les modes de réalisations sont définis par les revendications dépendantes.

En particulier, le dispositif de recharge comprend en outre un module de sécurité matériel configuré pour inhiber la commande du module de connexion par l'unité de traitement en réponse à la détection de la tension du fil de référence sensiblement à la valeur de référence.

En particulier, le module de sécurité est « matériel » en ce qu'il comporte essentiellement des composants électroniques (par exemple de type transistors et/ou dipôles tels qu'une résistance, une diode, une capacité, etc.) de sorte que le fonctionnement du dispositif de recharge ne s'appuie pas exclusivement sur l'exécution d'un logiciel et n'est donc pas tributaire de bugs possibles.

Dans une réalisation particulière, le module de sécurité comporte un circuit matériel comparateur d'une tension à comparer représentant la tension du fil de référence à une tension témoin. Ainsi, la détection de la tension du fil de référence à la valeur de référence est réalisée de façon robuste et fiable.

Selon un autre aspect de l'invention, le module de connexion est sélectivement connectable à l'unité de traitement, le module de sécurité étant configuré pour déconnecter le module de connexion de l'unité de traitement en réponse à la détection de la tension du fil de référence sensiblement à la valeur de référence. De fait, l'unité de traitement et le module de connexion sont physiquement déconnectés l'un de l'autre, ce qui augmente la sûreté de fonctionnement du dispositif.

Selon un autre aspect de l'invention, le module de sécurité comprend un module de détection connecté au fil de référence et configuré pour délivrer en sortie une information représentative du fait que la tension du fil de référence est sensiblement à la valeur de référence ou que ladite tension n'est pas sensiblement à la valeur de référence. Ceci permet de simplifier le fonctionnement du dispositif dans la mesure où tous les cas de figure autres que celui correspondant à une valeur de tension du fil de référence à la valeur de référence sont traités de manière identique.

Dans une réalisation particulière, l'information délivrée en sortie du module de détection en réponse à la détection de la tension du fil de référence sensiblement à la valeur référence est une tension sensiblement nulle, et une tension valant sensiblement la tension à comparer dans le cas contraire. Ceci permet également de fiabiliser le dispositif du fait que le cas de figure que le module de sécurité vise précisément à sécuriser est ainsi moins susceptible de causer un actionnement intempestif de composants réagissant à des tensions non nulles.

Selon un aspect de l'invention, le module de détection comprend un circuit de transformation configuré pour transformer la tension du fil de référence en ladite tension à comparer, pour comparer la tension à comparer à la tension témoin et pour détecter que la tension du fil de référence est sensiblement à la valeur de référence lorsque la tension à comparer est supérieure à la tension témoin. Ceci permet de minimiser la puissance électrique requise pour le fonctionnement du dispositif et d'augmenter la souplesse du dispositif du fait que la tension témoin est alors peu contrainte par les tensions à comparer susceptibles d'être obtenues.

Dans une réalisation particulière, le module de sécurité comprend en outre un module d'actionnement connecté en sortie du module de détection, le module d'actionnement étant configuré pour déconnecter le module de connexion de l'unité de traitement en réponse à la réception de l'information représentative du fait que la tension du fil de référence est sensiblement à la valeur de référence. Ceci facilite la maintenance du dispositif du fait que le module de sécurité présente des modules dont les fonctions sont complémentaires.

Selon un aspect de l'invention, le module de connexion est connecté à l'unité de traitement via un circuit comprenant un interrupteur actionnable entre une position ouverte et une position fermée. Cette architecture simple permet au module de sécurité de sécuriser le dispositif de façon robuste.

Selon un autre aspect de l'invention, le module d'actionnement comprend un relais configuré pour maintenir l'interrupteur en position ouverte en réponse à la réception de l'information représentative du fait que la tension du fil de référence est sensiblement à la valeur de référence.

Dans une réalisation particulière, le fil de référence est adapté pour présenter une tension de recharge ou l'une d'une pluralité de tensions de recharge possibles de valeur maximale strictement inférieure à la valeur de référence tant que la prise d'alimentation est branchée à l'équipement, le module de sécurité étant configuré pour autoriser la commande du module de connexion par l'unité de traitement en réponse à la détection du fait que la tension du fil de référence est la tension de recharge ou l'une des tensions de recharge.

L'invention concerne également une station de recharge d'un équipement en énergie électrique, caractérisée en ce qu'elle comprend un dispositif de recharge tel que défini ci-dessus.

Selon un aspect de l'invention, la station de recharge est une station de recharge en Mode 3 adaptée pour fournir à l'équipement une puissance électrique supérieure ou égale à 3 kW. Ceci permet notamment de sécuriser la recharge des véhicules électriques, cette recharge s'effectuant à des puissances électriques importantes et possiblement dans des zones à forte densité de population.

Par ailleurs, l'invention concerne un module de sécurité pour dispositif de recharge tel que défini ci-dessus, caractérisé en ce qu'il est un module matériel et est configuré pour inhiber la commande du module de connexion du dispositif de recharge par l'unité de traitement en réponse à la détection de la tension du fil de référence à la valeur de référence.

L'invention concerne en outre un module de commande pour dispositif de recharge tel que défini ci-dessus, le module étant destiné à être connecté à la prise d'alimentation du dispositif de recharge par un fil de référence adapté pour présenter une tension à une valeur de référence tant que la prise d'alimentation est débranchée d'un équipement à recharger, le module de commande comprenant :
- un module de connexion configuré pour connecter ou, sélectivement, déconnecter la prise d'alimentation de ladite source d'énergie électrique, et
- une unité de traitement configurée pour commander le module de connexion en fonction de la tension du fil de référence.

En particulier, le module de connexion et l'unité de traitement étant connectables et, sélectivement, déconnectables l'un de l'autre.

Selon un aspect du module de commande selon l'invention, le module de connexion et l'unité de traitement sont connectés l'un à l'autre via un circuit comprenant un interrupteur actionnable entre une position ouverte et une position fermée.

L'invention sera mieux comprise à la lecture de la description détaillée qui va suivre, donnée uniquement à titre d'exemple et faite en référence aux Figures annexées, sur lesquelles :
- la Figure 1 illustre un ensemble de recharge, une station de recharge et un dispositif de recharge selon l'invention ;
- la Figure 2 illustre une première variante du dispositif de recharge de la Figure 1 ; et
- la Figure 3 illustre une deuxième variante du dispositif de recharge de la Figure 1.

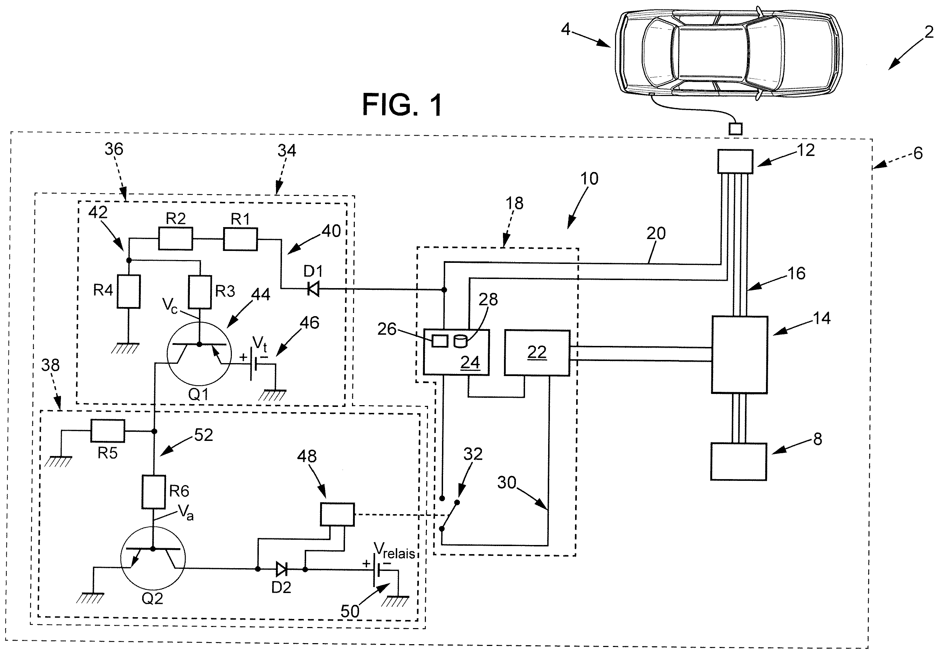

La Figure 1 illustre un ensemble de recharge 2. L'ensemble de recharge 2 comprend un équipement 4 rechargeable en énergie électrique. L'ensemble de recharge 2 comprend également une station de recharge 6 selon l'invention.

La station de recharge 6 comprend une source d'énergie électrique 8 prévue pour alimenter en énergie électrique l'équipement 4, et un dispositif de recharge 10 selon l'invention.

Le dispositif de recharge 10 comprend une prise d'alimentation 12 destinée à être branchée à l'équipement 4, par exemple sur une prise complémentaire de cet équipement (dimensions respectives non respectées sur la Figure 1). La prise d'alimentation 12 est en outre sélectivement connectable à la source d'alimentation 8 par l'intermédiaire d'un contacteur 14. La prise 12 est connectée au contacteur 14 par un ensemble de câbles 16 prévus pour alimenter cette dernière en énergie électrique destinée à l'équipement 4. Par exemple, le contacteur 14 se trouve au niveau d'un tableau électrique de la station 6, et les câbles 16 comprennent trois câbles raccordant la prise 12 au contacteur 14 et prévus pour alimenter la prise 12 en énergie électrique triphasée.

En outre, le dispositif de recharge 10 comprend un module de commande 18 configuré pour commander la recharge de l'équipement 4 par la station 6. En particulier, le module de commande 18 est configuré pour commander la connexion et la déconnexion de la prise 12 de la source d'alimentation 8 par l'actionnement du contacteur 14.

Le module de commande 18 est connecté à la prise d'alimentation 12 par un fil de référence 20. Le fil de référence 20 est par exemple connu sous le nom de fil « pilote ».

Le fil de référence 20 est configuré pour délivrer une tension continue sensiblement à une valeur de référence V_{ref} lorsque la prise 12 est débranchée de l'équipement. En outre, le fil de référence 20 est configuré pour fournir une tension alternative dont la valeur maximale vaut une valeur de recharge Vᵣ lorsque la prise 12 est branchée à l'équipement 4. La valeur de recharge Vᵣ est différente de la valeur de référence V_{ref}. Plus précisément, la valeur de recharge Vᵣ est strictement inférieure à la valeur de référence V_{ref}.

Dans certains modes de réalisation, la valeur de recharge Vᵣ peut prendre l'une d'une pluralité de valeurs de recharge Vᵣᵢ lorsque la prise 12 est branchée à l'équipement 4. Les différentes valeurs de recharge Vᵣᵢ sont représentatives du fait que la prise 12 est branchée à l'équipement 4, mais sont également respectivement représentatives d'un état particulier de l'équipement 4. Par exemple, les valeurs de recharge Vᵣᵢ comprennent une première valeur de recharge Vᵣ₁ représentative du fait que la prise 12 est branchée et que la recharge de l'équipement 4 n'est pas en cours, une deuxième valeur de recharge Vᵣ₂ représentative du fait que la prise 12 est branchée à l'équipement 4 et que la recharge est en cours, et une troisième valeur de recharge Vᵣ₃ représentative du fait que la prise 12 est branchée mais qu'une erreur, telle une surchauffe d'un appareil de l'équipement 4, s'est produite. Comme précédemment, toutes les valeurs de recharge Vᵣᵢ sont strictement inférieures à la valeur de référence V_{ref}.

Par exemple, la valeur de référence vaut 12 V. En outre, les première, deuxième et troisième valeurs de recharge valent respectivement 9 V, 6 V et 3 V. Par exemple, les tensions de recharge présentent une forme générale en créneaux de valeur positive la valeur de recharge correspondante et de valeur négative -12 V.

En pratique, la valeur de la tension du fil de référence 20 est modifiée par l'équipement 4 pour encoder son état et communiquer l'information correspondante à la station 6.

Le module de commande 18 comprend un module de connexion 22 et une unité de traitement 24.

Le module de connexion 22 est configuré pour commander la connexion et la déconnexion de la prise 12 de la source d'alimentation 8. En particulier, à cet effet, le module de connexion 22 est configuré pour commander l'actionnement du contacteur 14. Le module de connexion 22 comprend par exemple un relais configuré pour actionner le contacteur sous la commande de l'unité de traitement 24.

L'unité de traitement 24 est configurée pour commander le module de connexion 22 en fonction de la tension du fil de référence 20. De façon plus générale, l'unité de traitement 24 est configurée pour piloter les transferts d'énergie entre la source d'alimentation 8 et l'équipement 4. Elle est notamment configurée pour :
- vérifier la bonne connexion de l'équipement 4 à la station 6,
- vérifier la bonne connexion de la masse de l'équipement 4 à un circuit de protection de la station 6 (non représenté),
- vérifier la cohérence des puissances électriques entre les câbles 16 et l'équipement 4, et
- déterminer la puissance électrique allouée à l'équipement 4.

L'unité de traitement 24 comprend un processeur 26 et une mémoire 28 comprenant des logiciels permettant le fonctionnement de l'unité de traitement 24 lors de leur exécution par le processeur 26.

Le module de connexion 22 et l'unité de traitement 24 sont sélectivement connectables l'un à l'autre. Ils sont par exemple reliés l'un à l'autre par un circuit 30 comprenant un interrupteur 32 actionnable entre une position ouverte et une position fermée.

Selon l'invention, le dispositif de recharge 10 comprend en outre un module de sécurité 34. Le module de sécurité 34 est matériel, et non exclusivement logiciel. En outre, le module de sécurité 34 est distinct des autres éléments de la station de recharge 6, en particulier de l'unité de traitement 24.

Le module de sécurité 34 est configuré pour inhiber la commande du module de connexion 22 par l'unité de traitement 24 en réponse à la détection de la tension du fil de référence 20 sensiblement à la valeur de référence V_{ref}. Comme on le verra par la suite, ceci permet de disposer d'un mécanisme physique et disjoint du module de commande 18 qui puisse empêcher à lui seul l'alimentation de la prise 12 en énergie électrique alors que cette dernière est débranchée de l'équipement 4.

Le module de sécurité 34 est configuré pour basculer en position ouverte et maintenir en position ouverte l'interrupteur 32 du circuit 30 en réponse à la détection de la tension du fil de référence 20 à la valeur de référence V_{ref}. Ceci permet de sécuriser la station de recharge 6 de manière robuste et fiable. En outre, il est configuré pour basculer en position fermée et maintenir en position fermée l'interrupteur 32 en réponse à la détection du fait que la tension du fil de référence 20 n'est pas sensiblement à la valeur de référence V_{ref}. Plus précisément, le module de sécurité 34 est configuré pour basculer en position fermée et maintenir en position fermée l'interrupteur 32 en réponse à la détection du fait que la tension du fil de référence 20 est sensiblement à la ou l'une des valeurs de recharge.

Le module de sécurité 34 comprend un module de détection 36 et un module d'actionnement 38 connecté en sortie du module de détection 36.

Le module de détection 36 est configuré pour détecter que la tension du fil de référence vaut sensiblement la valeur de référence V_{ref} et pour délivrer en sortie une information représentative du fait que la tension du fil de référence vaut sensiblement la valeur de référence V_{ref}. Il est également configuré pour détecter que la tension du fil de référence est à la ou l'une des valeurs de recharge et pour délivrer en sortie l'information correspondante.

En particulier, dans le mode de réalisation de la Figure 1, le module de détection 36 est configuré pour délivrer en sortie une tension sensiblement nulle en réponse à la détection de la tension du fil 20 à la valeur de référence V_{ref}. En outre, comme décrit ci-après, il est configuré pour délivrer en sortie une tension à comparer V_{c} non nulle dans le cas où le fil de référence 20 présente une tension à l'une des valeurs de recharge Vᵣᵢ, et ce pour chaque valeur de recharge Vᵣᵢ.

Le module de détection 36 est connecté au fil de référence 20 et prélève la tension de ce fil au niveau de son raccord au module de commande 18. Le module de détection 36 comprend un circuit comparateur 40 configuré pour transformer la tension du fil de référence en une tension à comparer V_{c} et pour comparer cette tension V_{c} à une tension témoin Vₜ. Le circuit comparateur 40 comprend une diode D1 de redressement configurée pour conserver la partie positive de la tension du fil de référence 20. La diode D1 est connectée en série avec un pont diviseur de tension 42 comprenant quatre résistances R1 à R4 et fournissant en sortie la tension à comparer V_{c}. Le pont 42 est connecté en sortie à la base d'un transistor Q₁ dont le collecteur est connecté à une alimentation témoin 46 délivrant la tension témoin Vₜ, et dont l'émetteur forme la sortie du module de détection 36. Le transistor Q₁ est configuré pour être actif et délivrer en sortie la tension à comparer V_{c} lorsque celle-ci est inférieure à la tension témoin Vₜ et pour être inactif et délivrer une tension nulle dans le cas contraire. Le transistor Q₁ est par exemple un transistor de type PNP.

Les valeurs des résistances R1 à R4 et de la tension témoin Vₜ sont choisies de sorte que la valeur de la tension à comparer V_{c} obtenue à partir de la valeur de référence V_{ref}, c'est-à-dire la tension V_{c} lorsque l'équipement 4 est déconnecté, soit supérieure à la tension témoin Vₜ et que la valeur de la tension à comparer V_{c} résultant de la ou de chacune des valeurs de recharge Vᵣᵢ, c'est-à-dire lorsque l'équipement 4 est connecté, soit strictement inférieure à la tension témoin Vₜ. Par exemple les valeurs des résistances R1 à R4 et de la tension témoin Vₜ sont prises sensiblement égales à 56 kΩ, 200 kΩ, 330 kΩ, 200 Ω et 3,3 V respectivement. Les tensions à comparer V_{c} associées à la valeur de référence V_{ref} et à la première valeur de recharge Vᵣ₁, qui est la plus grande parmi les valeurs de recharge Vᵣᵢ, valent alors respectivement sensiblement 3,8 V et 2,8 V. Aussi, comme décrit plus en détail ci-après, le module de détection 36 délivre au module d'actionnement 38 une tension nulle lorsque la prise 12 est débranchée de l'équipement 4, et délivre la tension à comparer V_{c} lorsque la prise 12 est branchée.

Le module d'actionnement 38 est configuré pour déconnecter le module de connexion 22 de l'unité de traitement 24 lorsque le module de détection 36 fournit en sortie l'information selon laquelle la tension du fil de référence 20 est sensiblement à la valeur de référence V_{ref}. En outre, le module d'actionnement 38 est configuré pour connecter le module de connexion 22 à l'unité de traitement 24 lorsque le module de détection 36 détecte que le fil de référence 20 présente une tension à la ou l'une des valeurs de recharge.

A cet effet, le module d'actionnement 38 comprend un relais 48 monostable couplé à l'interrupteur 32. Le relais 48 est adapté pour basculer l'interrupteur 32 du circuit de connexion 30 entre ses positions ouverte et fermée. Plus spécifiquement, le relais 48 est configuré pour maintenir l'interrupteur 32 en position ouverte lorsqu'il n'est pas alimenté en énergie électrique, et pour maintenir l'interrupteur 32 en position fermée lorsqu'il est alimenté en énergie électrique. Le module d'actionnement 38 comprend en outre une diode D2 disposée de manière anti-parallèle par rapport au relais 48, et une alimentation de relais 50 connectée en série à la diode D2 et adaptée pour fournir une tension de relais Vᵣₑₗₐᵢₛ correspondant à la tension de fonctionnement du relais 48.

Le module d'actionnement 38 comprend également un transistor Q₂ de type NPN dont le collecteur est connecté à la diode D2, dont l'émetteur est connecté à une masse, et dont la base est connectée au module de détection 36 par l'intermédiaire d'un pont diviseur de tension 52 formé par des résistances R5 et R6. Le pont 52 transforme la tension fournie par le module de détection 36 en une tension d'actionnement Vₐ.

La valeur des résistances R5 et R6 est choisie de sorte que la tension d'actionnement Vₐ obtenue à partir de la tension à comparer V_{c} puisse activer le transistor Q₂. Par exemple, les valeurs des résistances R5 et R6 sont prises sensiblement égales à 10 kΩ et 1kΩ respectivement. En outre, la tension relais Vᵣₑₗₐᵢₛ présente par exemple une valeur de l'ordre de 5 V. Ainsi, lorsque le module de détection 36 délivre au module d'actionnement 38 la tension à comparer V_{c}, le transistor autorise la mise à la masse du circuit connecté au collecteur du transistor Q₂ (à droite sur la Figure 1) et l'alimentation du relais 48 par l'alimentation 50 pour le basculement de l'interrupteur 32 en position fermée.

Le fonctionnement de l'ensemble de recharge 2 va maintenant être décrit en référence à la Figure 1.

Initialement, la prise 12 n'est pas branchée à l'équipement. Le fil de référence 20 présente une tension continue sensiblement à la valeur de référence V_{ref}. Le module de détection 36 prélève cette tension, la transforme en la tension à comparer V_{c} puis la compare à la tension témoin Vₜ au niveau du transistor Q1. Or, du fait du choix des résistances R1 à R4 et de la tension témoin Vₜ, dans ce cas de figure, la tension à comparer V_{c} est alors supérieure à la tension témoin Vₜ. Le transistor Q1 est alors bloqué. Le module de détection 36 fournit alors au module d'actionnement 38 l'information selon laquelle la tension du fil de référence vaut la valeur de référence V_{ref}, et ce sous la forme d'une tension nulle. En conséquence, la tension d'actionnement Vₐ fournie à la base du transistor Q2 au sein du module d'actionnement 38 est alors nulle, de sorte que le transistor Q2 n'est pas passant. Le relais 48 n'est alors pas alimenté par l'alimentation 50. Le relais 48 maintient alors l'interrupteur 32 du circuit 30 en position ouverte, de sorte que l'unité de connexion 22 est déconnectée de l'unité de traitement 24 et ne peut être commandée par lui.

Lorsque la prise 12 est branchée à l'équipement 4, celui-ci modifie la tension du fil de référence 20, qui présente alors une tension à l'une des valeurs de recharge Vᵣᵢ. Au passage par la diode D1, seule la partie positive de la tension est conservée. Cette tension résultante est alors transformée en tension à comparer V_{c} par le pont 42. Du fait du choix des résistances R1 à R4 et de la tension témoin Vₜ, toutes les valeurs de recharge Vᵣᵢ sont inférieures à la tension témoin Vₜ. Le transistor Q1 est alors passant et délivre en sortie la tension à comparer V_{c}. La tension à comparer V_{c} est alors transformée par le module d'actionnement 38 en tension d'actionnement Vₐ, spécifiquement prévue pour activer le transistor Q₂ et le rendre passant. Dès lors, le circuit formé par le relais 48, l'alimentation de relais 50 et la diode D2 est alors connecté à la masse, de sorte que l'alimentation de relais 50 alimente le relais 48 en énergie électrique. Le relais 48 actionne l'interrupteur 32 du circuit 30 et commande son passage en position fermée. L'unité de connexion 22 est alors connectée à l'unité de traitement 24 et peut être commandée par elle. Le relais 48 maintient alors cette connexion tant que la tension du fil de référence 20 n'est pas détectée à la valeur de référence V_{ref}.

L'invention présente de nombreux avantages.

En effet, la présence du module de sécurité 34 permet de disposer d'un organe qui peut interrompre l'alimentation de la prise 12 par la source 8 indépendamment de l'unité de traitement 24. En outre, du fait que le module de sécurité 34 est matériel et donc non exclusivement logiciel, la probabilité d'une panne de mode commun du module de sécurité 34 et de l'unité de traitement 24 est fortement diminuée. Ainsi, la sûreté de fonctionnement du dispositif 10 et de la station 6 est sensiblement améliorée.

Par ailleurs, du fait que le module de sécurité déconnecte physiquement l'unité de traitement 22 du module de connexion, l'invention permet de sécuriser la station 6 de façon fiable et robuste.

En outre, l'implémentation du module de sécurité est elle-même robuste : la présence du circuit comparateur permet de détecter aisément la tension du fil de référence 20 à la valeur de référence. Cette détection est communiquée au module d'actionnement 38 qui coupe la connexion physique entre l'unité de traitement et le module de connexion.

Les transformations de la tension du fil de référence en la tension à comparer puis en la tension d'actionnement permettent de fiabiliser plus avant le dispositif et de permettre d'en minimiser le coût. En effet, ceci permet de ramener la tension du fil de référence à des tensions comprises dans l'enveloppe de fonctionnement de composants simples tels que des transistors classiques, et limite ainsi le risque de panne du module de sécurité 34.

Par ailleurs, la présence du module de sécurité au sein du dispositif n'impacte pas le fonctionnement du dispositif lorsque la prise est branchée, de sorte que le module de sécurité ne perturbe pas le fonctionnement de ce dernier et peut être installé de manière aisée sur un dispositif de recharge en cours de vie.

La station 6 et le dispositif 10 ont été décrits en rapport avec un équipement 4 quelconque.

Toutefois, l'invention est particulièrement adaptée au domaine des véhicules électriques.

Ainsi, par exemple, l'équipement 4 est un véhicule électrique rechargeable tel qu'une voiture. En outre, la station 6 est une station de recharge pour ce type de véhicules, et est par exemple agencée dans un environnement urbain. L'unité de traitement 24 et le module de connexion 22 sont par exemple respectivement un ordinateur en Mode 3 et un relais en Mode 3. De manière connue, le Mode 3 est défini par une norme relative aux systèmes de charges conductives pour véhicules électriques, telle que la norme européenne CEI 61851-1. Ce Mode 3 s'applique aux recharges de puissance électrique supérieure à 3 kW et vise à sécuriser les biens et les personnes.

Toutefois, l'invention ne se limite pas à cette application, et est généralement adaptée à tout dispositif et toute station adaptée pour délivrer des puissances électriques importantes pouvant présenter des risques pour les personnes et les biens.

En outre, d'autres modes de réalisation de l'invention sont envisageables.

Notamment, le module de détection 36 a été décrit pour une implémentation particulière reposant sur un pont diviseur de tension connecté à un transistor. Toutefois, d'autres implémentations sont envisageables. Par exemple, dans certains modes de réalisation, le module de détection 36 est dépourvu de pont diviseur, la comparaison s'effectuant directement entre la partie positive de la tension du fil de référence et une tension témoin choisie pour observer le principe de fonctionnement ci-dessus. Par exemple, la tension témoin est alors choisie égale à 10 V. En pratique, dans ces modes de réalisation, la tension à comparer est sensiblement égale à la tension du fil de référence 20.

En outre, dans certains modes de réalisation, la comparaison réalisée via le circuit comparateur 40 est réalisée via un autre composant qu'un transistor et fournissant un signal d'un premier niveau logique, préférentiellement de niveau logique bas, lorsque la tension du fil de référence est détectée sensiblement à la valeur de référence V_{ref}, et un signal d'un deuxième niveau logique, par exemple haut, dans le cas contraire.

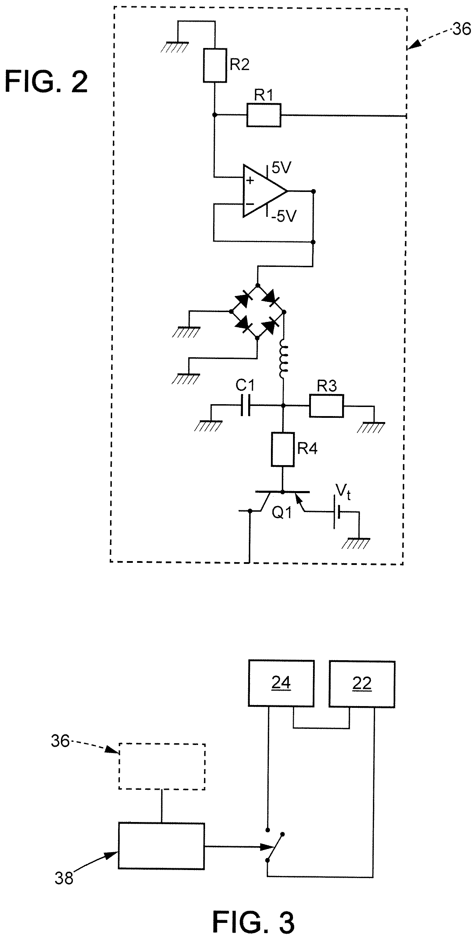

Par exemple, en référence à la Figure 2, le circuit comparateur comprend un amplificateur opérationnel connecté en entrée au fil de référence via un pont diviseur par exemple configuré pour ramener une tension de 12V à 5V. Cette connexion est dépourvue de diode D1. L'amplificateur est connecté en sortie à un pont de diodes fournissant un signal continu. Le pont à diode est connecté en sortie à une inductance elle-même connectée à un circuit de mise en forme délivrant la tension à comparer V_{c} en vue de la comparaison de cette dernière avec la tension témoin Vₜ. La sortie du circuit de mise en forme est raccordée au transistor Q1. Le circuit de mise en forme comprend par exemple deux résistances R3 et R4 et un condensateur C1 disposés respectivement sur une branche connectée à une masse, sur une branche connectée au transistor Q1 et sur une branche connectée à une masse, ces branches étant connectées à la sortie de l'inductance.

En pratique, le module de détection 36 peut comprendre tout composant ou ensemble de composants permettant de détecter que la tension du fil de référence vaut sensiblement la valeur de référence ou l'une des valeurs de recharge Vᵣᵢ et pour fournir au module d'actionnement 38 un signal présentant une première valeur lorsque la tension du fil de référence vaut sensiblement la valeur de référence V_{ref} et présentant une ou l'une d'une pluralité de deuxième valeurs différentes de la première valeur lorsque le fil de référence présente une tension sensiblement à la ou l'une des valeurs de recharge respectivement.

En particulier, dans certains modes de réalisation, le module de détection 36 comprend un microcontrôleur configuré pour détecter la valeur de la tension du fil de référence et pour fournir en sortie un signal représentatif du fait que cette tension vaut ou non la valeur de référence. Par exemple, le microcontrôleur est un microcontrôleur de type PIC, un contrôleur de type FGPA pour « Field Programmable Gâte Array » qui signifie réseau logique programmable, ou autre.

De même, le module d'actionnement 38 peut comprendre tout composant ou ensemble de composants permettant d'ouvrir et maintenir ouvert l'interrupteur 32 lorsque ce module reçoit du module de détection le signal à la première valeur, et permettant de fermer et maintenir fermé l'interrupteur 32 lorsque ce signal est à la ou l'une quelconque des deuxièmes valeurs.

Ainsi, en variante, en référence à la Figure 3, le module d'actionnement 38 comprend ou est formé par un microcontrôleur configuré pour commander à l'ouverture ou à la fermeture l'interrupteur 30 du circuit 32 en fonction du signal délivré par le module de détection 36. Comme précédemment, le module d'actionnement 38 est configuré pour commander l'interrupteur 30 à l'ouverture tant que le module de détection 36 fournit une information représentative du fait que la tension du fil de référence 20 vaut sensiblement la valeur de référence V_{ref}, et pour fermer l'interrupteur 30 lorsque le module de détection 36 fournit une information représentative du fait que la tension du fil de référence vaut la ou l'une des valeurs de recharge. Par exemple, le microcontrôleur est un microcontrôleur de type PIC, un contrôleur de type FGPA pour « Field Programmable Gâte Array » qui signifie réseau logique programmable, ou autre.

En outre, dans certains modes de réalisation, les modules de détection 36 et d'actionnement 38 sont combinés sous la forme d'un microcontrôleur configuré pour détecter la valeur de la tension du fil de référence et pour commander à l'ouverture l'interrupteur 32 lorsque la tension du fil de référence vaut sensiblement la valeur de référence V_{ref} et pour commander à la fermeture l'interrupteur 32 lorsque le fil de référence est à la ou à l'une des valeurs de recharge Vᵣᵢ.

A noter toutefois qu'afin de minimiser les chances d'occurrence d'une panne pour des raisons logicielles, on privilégie toutefois les modes de réalisation dans lesquels le module de sécurité 34 ne comprend pas ou que peu d'éléments logiciels. Ainsi, par exemple, les modes de réalisation dans lesquels l'un et/ou l'autre des modules de détection 36 et d'actionnement 38 comprennent un microcontrôleur ne sont pas privilégiés, mais néanmoins envisageables.

## Revendications

1. Dispositif de recharge d'un équipement en énergie électrique, le dispositif de recharge comprenant :
- une prise d'alimentation (12) destinée à être branchée à l'équipement (4) et sélectivement connectable à une source d'énergie électrique (8) pour l'alimentation en énergie électrique de l'équipement,
- un contacteur (14) par l'intermédiaire duquel la prise d'alimentation (12) est sélectivement connectable à la source d'énergie électrique (8),
- un module de commande (18) connecté à la prise d'alimentation par un fil de référence (20) adapté pour présenter une tension à une valeur de référence (V_{ref}) tant que la prise d'alimentation (12) est débranchée de l'équipement, le module de commande comprenant :
- un module de connexion (22) configuré pour commander le contacteur (14) pour la connexion ou, sélectivement, la déconnexion de la prise d'alimentation (12) de ladite source d'énergie électrique (8), et
- une unité de traitement (24) configurée pour commander le module de connexion (22) en fonction de la tension du fil de référence (20),
**caractérisé en ce que** le dispositif de recharge comprenant en outre un module de sécurité (34), matériel, configuré pour inhiber la commande du module de connexion (22) par l'unité de traitement (24) en réponse à la détection de la tension du fil de référence à la valeur de référence.

2. Dispositif de recharge selon la revendication 1, **caractérisé en ce que** le module de sécurité comporte un circuit matériel comparateur (40) d'une tension à comparer (V_{c}) représentant la tension du fil de référence (20), à une tension témoin (Vₜ).

3. Dispositif de recharge selon la revendication 1 ou 2, **caractérisé en ce que** le module de connexion (22) est sélectivement connectable ou déconnectable de l'unité de traitement (24), le module de sécurité (34) étant configuré pour déconnecter le module de connexion de l'unité de traitement en réponse à la détection de la tension du fil de référence (20) à la valeur de référence (V_{ref}).

4. Dispositif de recharge selon l'une des revendications précédentes, **caractérisé en ce que** le module de sécurité (34) comprend un module de détection (36) connecté au fil de référence (20) et configuré pour délivrer en sortie une information représentative du fait que la tension du fil de référence est à la valeur de référence (V_{ref}) ou que ladite tension n'est pas à la valeur de référence.

5. Dispositif de recharge selon les revendications 2 et 4, **caractérisé en ce que** l'information délivrée en sortie du module de détection (36) est une tension nulle en réponse à la détection de la tension du fil de référence à la valeur référence (V_{ref}), et une tension valant la tension à comparer (V_{c}) dans le cas contraire.

6. Dispositif de recharge selon les revendications 2 et 4, **caractérisé en ce que** le module de détection (36) comprend un circuit de transformation (42) configuré pour transformer la tension du fil de référence (20) en ladite tension à comparer (V_{c}), pour comparer la tension à comparer à la tension témoin (Vₜ) et pour détecter que la tension du fil de référence est à la valeur de référence lorsque la tension à comparer (V_{c}) est supérieure à la tension témoin.

7. Dispositif de recharge selon l'une des revendications 3 à 6, **caractérisé en ce que** le module de sécurité (34) comprend en outre un module d'actionnement (38) connecté en sortie du module de détection, le module d'actionnement étant configuré pour déconnecter le module de connexion (22) de l'unité de traitement (24) en réponse à la réception de l'information représentative du fait que la tension du fil de référence est à la valeur de référence.

8. Dispositif de recharge selon l'une des revendications précédentes, **caractérisé en ce que** le module de connexion (22) est connecté à l'unité de traitement via un circuit (30) comprenant un interrupteur (32) actionnable entre une position ouverte et une position fermée.

9. Dispositif de recharge selon les revendications 7 et 8 prises en combinaison, **caractérisé en ce que** le module d'actionnement (38) comprend un relais (48) configuré pour maintenir l'interrupteur en position ouverte en réponse à la réception de l'information représentative du fait que la tension du fil de référence est à la valeur de référence (V_{ref}).

10. Dispositif de recharge selon l'une quelconque des revendications précédentes, **caractérisé en ce que** le fil de référence (20) est adapté pour présenter une tension valant une valeur de recharge ou l'une d'une pluralité de valeurs de recharge strictement inférieures à la valeur de référence (V_{ref}) tant que la prise d'alimentation est branchée à l'équipement, le module de sécurité (34) étant configuré pour autoriser la commande du module de connexion par l'unité de traitement en réponse à la détection du fait que la tension du fil de référence est à la ou l'une tension des valeurs de recharge.

11. Station de recharge d'un équipement en énergie électrique, **caractérisée en ce qu'**elle comprend un dispositif de recharge (10) selon l'une quelconque des revendications précédentes.

12. Station de recharge selon la revendication 11, **caractérisée en ce qu'**elle est une station de recharge en Mode 3 adaptée pour fournir à l'équipement (4) une puissance électrique supérieure ou égale à 3 kW, ledit Mode 3 étant défini par une norme relative aux systèmes de charges conductives pour véhicules électriques, telle que la norme européenne CEI 61851-1.

## Patentansprüche

1. Wiederaufladevorrichtung eines Gerätes mit elektrischer Energie, wobei die Wiederaufladevorrichtung umfasst:
- ein Netzkabel (12), das dazu ausgelegt ist, an das Gerät (4) angeschlossen zu werden, und das wahlweise mit einer elektrischen Energiequelle (8) zur elektrischen Energieversorgung des Geräts verbindbar ist,
- ein Schütz (14), durch welches das Netzkabel (12) wahlweise mit der elektrischen Energiequelle (8) verbindbar ist,
- ein Steuermodul (18), das durch einen Referenzdraht (20) mit dem Netzkabel verbunden ist, der dazu ausgelegt ist, eine Spannung mit einem Referenzwert (Vref) aufzuweisen, solange das Netzkabel (12) von dem Gerät getrennt ist, wobei das Steuermodul umfasst:
- ein Verbindungsmodul (22), das dazu ausgelegt ist, das Schütz (14) so zu steuern, dass das Netzkabel (12) mit der elektrischen Energiequelle (8) verbunden oder wahlweise von dieser getrennt wird, und
- eine Verarbeitungseinheit (24), die dazu ausgelegt ist, das Verbindungsmodul (22) in Abhängigkeit von der Spannung des Referenzdrahts (20) zu steuern,
**dadurch gekennzeichnet, dass** die Wiederaufladevorrichtung ferner ein Hardware-Sicherheitsmodul (34) umfasst, das dazu ausgelegt ist, das Steuern des Verbindungsmoduls (22) durch die Verarbeitungseinheit (24) zu verhindern, wenn nachgewiesen wird, dass die Spannung des Referenzdrahts den Referenzwert aufweist.

2. Wiederaufladevorrichtung nach Anspruch 1, **dadurch gekennzeichnet, dass** das Sicherheitsmodul eine Komparator-Hardwareschaltung (40) einer den Referenzdraht (20) repräsentierenden Vergleichsspannung (V_{c}) mit einer Kontrollspannung (Vₜ) aufweist.

3. Wiederaufladevorrichtung nach Anspruch 1 oder 2, **dadurch gekennzeichnet, dass** das Verbindungsmodul (22) wahlweise verbindbar mit oder trennbar von einer Verarbeitungseinheit (24) ist, wobei das Sicherheitsmodul (34) dazu ausgelegt ist, das Verbindungsmodul von der Verarbeitungseinheit zu trennen, wenn nachgewiesen wird, dass die Spannung des Referenzdrahts (20) den Referenzwert (V_{ref}) aufweist.

4. Wiederaufladevorrichtung nach einem der vorangehenden Ansprüche, **dadurch gekennzeichnet, dass** das Sicherheitsmodul (34) ein Nachweismodul (36) umfasst, das mit dem Referenzdraht (20) verbunden und dazu ausgelegt ist, eine Information auszugeben, die darstellt, dass die Spannung des Referenzdrahts den Referenzwert (V_{ref}) aufweist oder dass diese Spannung nicht den Referenzwert aufweist.

5. Wiederaufladevorrichtung nach den Ansprüchen 2 und 4, **dadurch gekennzeichnet, dass** die von dem Nachweismodul (36) ausgegebene Information in einer Nullspannung besteht, wenn nachgewiesen wird, dass die Spannung des Referenzdrahts den Referenzwert (V_{ref}) aufweist, und anderenfalls in einer Spannung in Höhe der Vergleichsspannung (V_{c}) besteht.

6. Wiederaufladevorrichtung nach den Ansprüchen 2 und 4, **dadurch gekennzeichnet, dass** das Nachweismodul (36) eine Transformationsschaltung (42) umfasst, die dazu ausgelegt ist, die Spannung des Referenzdrahts (20) in die Vergleichsspannung (V_{c}) zu transformieren, um die Vergleichsspannung mit der Kontrollspannung (Vt) zu vergleichen und nachzuweisen, dass die Spannung des Referenzdrahts den Referenzwert aufweist, wenn die Vergleichsspannung (V_{c}) höher als die Kontrollspannung ist.

7. Wiederaufladevorrichtung nach einem der Ansprüche 3 bis 6, **dadurch gekennzeichnet, dass** das Sicherheitsmodul (34) ferner ein Betätigungsmodul (38) umfasst, das am Ausgang des Nachweismoduls angeschlossen ist, wobei das Betätigungsmodul dazu ausgelegt ist, das Verbindungsmodul (22) von der Verarbeitungseinheit (24) zu trennen, wenn die Information erhalten wird, die darstellt, dass die Spannung des Referenzdrahts den Referenzwert aufweist.

8. Wiederaufladevorrichtung nach einem der vorangehenden Ansprüche, **dadurch gekennzeichnet, dass** das Verbindungsmodul (22) mit der Verarbeitungseinheit über eine Schaltung (30) verbunden ist, die einen Schalter (32) umfasst, der zwischen einer offenen Stellung und einer geschlossenen Stellung betätigbar ist.

9. Wiederaufladevorrichtung nach den Ansprüchen 7 und 8 in Kombination, **dadurch gekennzeichnet, dass** das Betätigungsmodul (38) ein Relais (48) umfasst, das dazu ausgelegt ist, den Schalter in offener Stellung zu halten, wenn die Information erhalten wird, die darstellt, dass die Spannung des Referenzdrahts den Referenzwert (V_{ref}) aufweist.

10. Wiederaufladevorrichtung nach einem der vorangehenden Ansprüche, **dadurch gekennzeichnet, dass** der Referenzdraht (20) dazu ausgelegt ist, eine Spannung in Höhe eines Wiederaufladewertes oder eines einer Vielzahl von Wiederaufladewerten, die streng unterhalb des Referenzwerts (V_{ref}) liegen, aufzuweisen, solange das Netzkabel an das Gerät angeschlossen ist, wobei das Sicherheitsmodul (34) dazu ausgelegt ist, das Steuern des Verbindungsmoduls durch die Verarbeitungseinheit zu gestatten, wenn nachgewiesen wird, dass die Spannung des Referenzdrahts die Spannung des Wiederaufladewertes bzw. des einen der Wiederaufladungswerte aufweist.

11. Wiederaufladestation eines Geräts mit elektrischer Energie, **dadurch gekennzeichnet, dass** sie eine Wiederaufladevorrichtung (10) nach einem der vorangehenden Ansprüche umfasst.

12. Wiederaufladestation nach Anspruch 11, **dadurch gekennzeichnet, dass** es sich um eine Wiederaufladestation des Modus 3 handelt, die dazu ausgelegt ist, das Gerät (4) mit einer elektrischen Energie zu versorgen, die größer oder gleich 3 kW ist, wobei der Modus 3 durch eine Norm bezüglich konduktiven Ladesystemen für Elektrofahrzeuge definiert wird, wie der europäischen Norm CEI 61851-1.

## Claims

1. Charging device for electrically charging equipment, the charging device comprising:
- a power outlet (12) destined to be connected to the equipment (4) and capable of being selectively connected to an electrical power source (8) for electrically powering the equipment,
- a contactor (14) through which the power outlet (12) can selectively be connected to the electrical power source (8),
- a control module (18) connected to the power outlet by a reference wire (20) designed to have a voltage equal to a reference value (V_{ref}) when the power outlet (12) is disconnected from the equipment, the control module comprising:
-- a connection module (22) configured to control the contactor (14) for the connection or, selectively, the disconnection of the power outlet (12) to/from said electrical power source (8), and
-- a processing unit (24) configured to control the connection module (22) depending on the voltage of the reference wire (20),
**characterised in that** the charging device further comprises a hardware security module (34), configured to disable the control of the connection module (22) by the processing unit (24) in response to detecting a voltage of the reference wire that is equal to the reference value.

2. Charging device according to claim 1, **characterised in that** the security module comprises a comparative hardware circuit (40) for comparing a comparison voltage (V_{c}) representing the voltage of the reference wire (20) with a control voltage (Vₜ).

3. Charging device according to either claim 1 or claim 2, **characterised in that** the connection module (22) can selectively be connected or disconnected from the processing unit (24), the security module (34) being configured to disconnect the connection module from the processing unit in response to detecting a voltage of the reference wire (20) that is equal to the reference value (V_{ref}).

4. Charging device according to one of the previous claims, **characterised in that** the security module (34) comprises a detection module (36) connected to the reference wire (20) and configured so as to produce at the output, information representing the fact that the voltage of the reference wire is equal to the reference value (V_{ref}) or that said voltage is not equal to the reference value.

5. Charging device according to claim 2 and claim 4, **characterised in that** the information produced at the output of the detection module (36) is a zero voltage in response to detecting a voltage of the reference wire that is equal to the reference value (V_{ref}), and conversely is a voltage equal to the comparison voltage (V_{c}).

6. Charging device according to claim 2 and claim 4, **characterised in that** the detection module (36) comprises a transformation circuit (42) configured so as to transform the voltage of the reference wire (20) into said comparison voltage (V_{c}), in order to compare the comparison voltage with the control voltage (Vₜ) and in order to detect whether the voltage of the reference wire is equal to the reference value when the comparison voltage (V_{c}) is greater than the control voltage.

7. Charging device according to one of claims 3 to 6, **characterised in that** the security module (34) further comprises an actuation module (38) connected at the output of the detection module, the actuation module being configured so as to disconnect the connection module (22) from the processing unit (24) in response to receiving information representing the fact that the voltage of the reference wire is equal to the reference value.

8. Charging device according to one of the previous claims, **characterised in that** the connection module (22) is connected to the processing unit via a circuit (30) comprising a switch (32) that can be actuated between an open position and a closed position.

9. Charging device according to claim 7 and claim 8 implemented together, **characterised in that** the actuation module (38) comprises a relay (48) configured so as to maintain the switch in the open position in response to receiving the information representing the fact that the voltage of the reference wire is equal to the reference value (V_{ref}).

10. Charging device according to any of the previous claims, **characterised in that** the reference wire (20) is designed to have a voltage that is equal to a charging value or to one of a plurality of charging values that are strictly lower than the reference value (V_{ref}) when the power socket is connected to the equipment, the security module (34) being configured so as to authorise the control of the connection module by the processing unit in response to detecting the fact that the voltage of the reference wire is equal to the or to one of the voltages of the charging values.

11. Charging station for electrically charging equipment, **characterised in that** it comprises a charging device (10) according to any of the previous claims.

12. Charging station according to claim 11, **characterised in that** it is a Mode 3 charging station, designed to supply the equipment (4) with an electrical power greater than or equal to 3 kW, said Mode 3 being defined by a standard on electric vehicle conductive charging systems, such as the European standard IEC 61851-1.
